Europäisches Patentamt

European Patent Office

Office européen des brevets

(11) Veröffentlichungsnummer: **0 323 547**
**B1**

# EUROPÄISCHE PATENTSCHRIFT

(45) Veröffentlichungstag der Patentschrift:
22.08.90

(51) Int. Cl.5: **F16K 11/00**

(21) Anmeldenummer: 88115102.1

(22) Anmeldetag: 15.09.88

(54) Armatur für über einem Armaturkörper montierte Überlauf-Heisswassergeräte.

(30) Priorität: 08.01.88  DE 8800125 U

(43) Veröffentlichungstag der Anmeldung:
12.07.89 Patentblatt 89/28

(45) Bekanntmachung des Hinweises auf die Patenterteilung:
22.08.90 Patentblatt 90/34

(84) Benannte Vertragsstaaten:
BE CH DE FR IT LI LU NL

(56) Entgegenhaltungen:
EP-A- 0 187 179
DE-B- 1 217 718

(73) Patentinhaber: Firma Meloh-Armaturen GmbH, Im Mühlental 17, D-5860 Iserlohn 7(DE)

(72) Erfinder: Meloh, Hansgert, Oestricher Strasse 146, D-5860 Iserlohn 7(DE)
Erfinder: Ruppel, Horst-Friedrich, Rauhe Hardt 4, D-5860 Iserlohn 7(DE)
Erfinder: Ruppel, Manfred, Rauhe Hardt 8, D-5860 Iserlohn 7(DE)

(74) Vertreter: Dörner, Lothar, Dipl.-Ing., Stresemannstrasse 15, D-5800 Hagen 1(DE)

## Beschreibung

### Technisches Gebiet:

Die Erfindung bezieht sich auf eine Armatur für über einem Armaturkörper montierte Überlauf-Heißwassergeräte, welcher mit einem Mischwasser-Ablauf, mit einem Kaltwasser-Zulauf, der in eine mit einem in Ansicht in Richtung des Kaltwasserzulaufs links angeordneten Warmventil versehene Kaltwasser- Gerätezuführung zu einem Gerätezulauf für das Heißwassergerät und in eine mit einem rechts angeordneten Kaltventil versehene Kaltwasser-Ablaufzuführung zum Mischwasser-Ablauf geteilt ist, sowie mit einem aus dem Heißwassergerät gespeisten Warmwasser-Überlauf versehen ist, der in dem Mischwasser-Ablauf mündet, und welcher von einer eine Innenbohrung aufweisenden und zwischen sich und dem Armaturkörper einen von der Innenbohrung getrennten Ringraum bildenden Umlenkhülse durchsetzt ist.

Eine Armatur der vorgenannten Art wird als Überlauf-Armatur bezeichnet. Sie löst das Problem, daß die Kaltwasser-Zuführung zu dem an das Heißwassergerät angeschlossenen Kaltwasser-Zulauf und der aus dem Heißwassergerät gespeiste Warmwasser-Überlauf herkömmlichen Überlauf-Heißwassergeräten angepaßt ist, außerdem der Mischwasser-Ablauf unverändert bleibt; dagegen das Kaltventil und das Warmventil so angeordnet sind, wie es von den bei weitem häufiger verwendeten Druckarmaturen bekannt ist. Der Benutzer muß also nicht umdenken; vielmehr zapft er - wie er es von Druckarmaturen gewohnt ist - mit dem rechts angeordneten Ventil Kaltwasser, mit dem links angeordneten Ventil Warmwasser. Ein Bedienungsfehler infolge Verwechslung der Überlaufarmatur mit einer Druckarmatur kann nicht auftreten.

### Stand der Technik:

Bei der aus EP-A-0 187 179 bekannten Überlauf-Armatur ist die Umlenkhülse in dem von dem Warmventil abgehenden Teil der Gerätezuführung angeordnet. Die Innenbohrung der Umlenkhülse ist einerseits mit dem von dem Warmventil angehenden Teil der Gerätezuführung und andererseits mit dem Gerätezulauf verbunden. Der Ringraum der Umlenkhülse ist mit dem Warmwasser-Überlauf, dem Mischwasser-Ablauf und dem von dem Kaltventil abgehenden Teil der Ablaufzuführung verbunden.

### Darstellung der Erfindung:

Der Erfindung liegt die Aufgabe zugrunde, eine weitere Lösung für das genannte Problem zu schaffen, insbesondere für Überlauf-Armaturen, bei denen - angepaßt an die Überlauf-Speicher - der Gerätezulauf und der Warmwasser-Überlauf extrem weit auseinander liegen. Gemäß der Erfindung wird diese Aufgabe dadurch gelöst, daß die Umlenkhülse in dem an dem Warmventil ankommenden Teil der Gerätezuführung angeordnet, über ihre Innenbohrung einerseits mit dem Kaltwasserzulauf, andererseits mit dem Warmventil verbunden und an der dem Warmventil zugewandten Stirnseite als Ventilsitz ausgebildet ist, sowie über ihren Ringraum mit dem quer zu dem ankommenden Teil verlaufenden abgehenden Teil der Gerätezuführung verbunden ist.

Die Verlegung der Umlenkhülse in den an dem Warmventil ankommenden Teil der Gerätezuführung und die veränderten Verbindungen der Innenbohrung und des Ringraums ermöglichen zusammen mit der Ausgestaltung der Umlenkhülse als langer Ventilsitz eine solche Führung der Kanäle in dem Armaturenkörper, daß der Gerätezulauf und der Warmwasser-Überlauf an die Stirnseiten der Armatur, also extrem weit auseinander gelegt werden können.

### Kurze Beschreibung der Zeichnungen:

Im folgenden wird die Erfindung anhand von lediglich einen Ausführungsweg darstellenden Zeichnungen näher erläutert. Es zeigt

Fig. 1 einen Vertikalschnitt durch eine Armatur in der Ebene von Gerätezulauf und Warmwasser-Überlauf;

Fig. 2 einen Horizontalschnitt durch die in Fig. 1 dargestellte Armatur in der Ebene der Umlenkhülse.

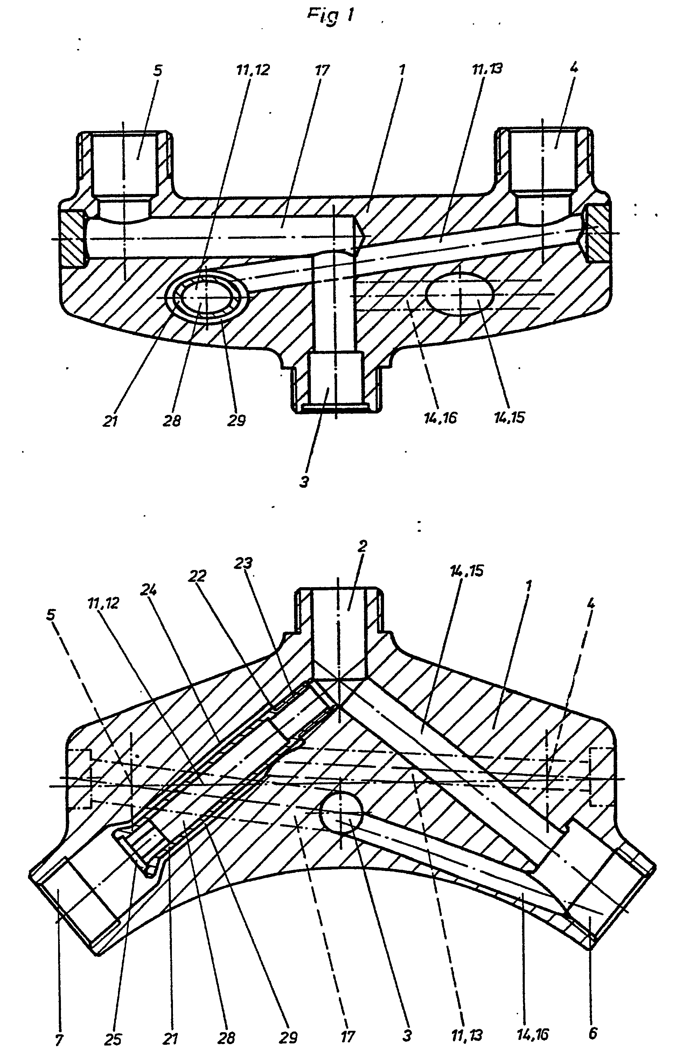

### Bester Weg zur Ausführung der Erfindung:

Die Überlauf-Armatur weist einen Armaturkörper 1 auf. In dem Armaturenkörper 1 sind folgende Verbindungen für Außenanschlüsse vorgesehen, wobei sich die Seitenbezeichnungen auf die Ansicht des an ein nicht dargestelltes Heißwassergerät montierten Armaturenkörpers 1 beziehen: Mittig in einer Horizontalebene ein Kaltwasser-Zulauf 2; senkrecht zu dem Kaltwasser-Zulauf 2 nach unten gerichtet ein Mischwasser-Ablauf 3; parallel zu dem Mischwasser-Ablauf jedoch nach oben gerichtet und im Bereich der Stirnseite des Armaturenkörpers rechts ein Gerätezulauf 4 für Kaltwasser und links ein Warmwasser-Überlauf 5; seitlich an den vorderen Enden rechts ein nur mit einem Ventilsitz dargestelltes Kaltventil 6 und links ein ebenfalls nur mit einem Ventilsitz dargestelltes Warmventil 7.

Der Kaltwasser-Zulauf 2 ist in dem Armaturenkörper 1 in eine Gerätezuführung 11 und eine Ablaufzuführung 14 geteilt. Als Gerätezuführung 11 ist dabei eine mit dem Warmventil 7 versehene Kaltwasser-Zuführung für den Gerätezulauf 4 bezeichnet; als Ablaufzuführung 14 eine mit dem Kaltventil 6 versehene Kaltwasser-Zuführung zum Mischwasser-Ablauf 3. Die Gerätezuführung 11 ist ihrerseits unterteilt in einen in Strömungsrichtung bei dem Warmventil 7 ankommenden Teil 12 und einen vom Warmventil 7 abgehenden Teil 13; die Ablaufzuführung 14 in einen in Strömungsrichtung bei dem Kaltventil 6 ankommenden Teil 15 und einen von dem Kaltventil 6 abgehenden Teil 16. Der von dem Warmventil 7 abgehende Teil 13 der Gerätezuführung 11 durchsetzt den Armaturkörper 1 quer. Der Warmwasserüberlauf 5 ist mit dem Mischwasser-Ablauf 3 über einen Kanal 17 verbunden.

Eine Umlenkhülse 21 durchsetzt den Armaturenkörper 1. Die Umlenkhülse 21 ist in eine Stufenbohrung 22 eingebracht, die in dem an dem Warmventil 7 ankommenden Teil 12 der Gerätezuführung 11 vorgesehen ist. Der Teil 23 geringeren Durchmessers der Bohrung 22 steht mit dem Kaltwasserzulauf 2 in Verbindung.In den Teil 24 größeren Durchmessers der Stufenbohrung 22 ist die Umlenkhülse 21 abgedichtet eingebracht. Die Umlenkhülse 21 ist an beiden Stirn seiten offen, sodaß ihre Innenbohrung 28 sowohl mit dem Kaltwasserzulauf 2 als auch mit dem Warmventil 7 in Verbindung steht. Auf der dem Warmventil 7 zugewandten Stirnseite ist die Umlenkhülse 21 als Ventilsitz 25 ausgebildet. Öffnen und schließen des Warmventils 7 gibt den ankommenden Teil 12 der Gerätezuführung 11 frei oder schließt ihn.

Zwischen der Umlenkhülse 21 und dem Teil 24 größeren Durchmessers der Stufenbohrung 22 ist ein Ringraum 29 vorhanden, der gegenüber der Innenbohrung 28 und dem Teil 23 geringeren Durchmessers der Stufenbohrung 22 durch das Warmventil 7 abschließbar ist. Der Ringraum 29 steht mit dem abgehenden Teil 13 der Gerätezuführung 11 in Verbindung, der quer zu dem ankommenden Teil 12 verläuft und in geringerem Abstand von der Stufe der Stufenbohrung 22 als von dem Ventilsitz 25 mündet.

Der an dem Warmventil 7 ankommende Teil 12 der Gerätezuführung 11, der beim Kaltventil 6 ankommende Teil 15 der Ablaufzuführung 14 und der von dem Kaltventil 6 abgehende Teil 16 der Ablaufzuführung 14 liegen in derselben Ebene. Der Kanal 17, der den Warmwasser-Überlauf 5 mit dem Mischwasser-Ablauf 3 verbindet, liegt in einer zu der genannten Ebene parallelen Ebene. Der von dem Warmventil 7 abgehende Teil 13 der Gerätezuführung liegt in einer zu den parallelen Ebenen schrägen Ebene.

Mit der Armatur ist der herkömmliche Betrieb eines Heißwassergeräts gewährleistet: Wird das Warmventil 7 geöffnet, wird Kaltwasser aus dem Kaltwasser-Zulauf 2 über die Gerätezuführung 11 dem Gerätezulauf 4 für Kaltwasser zugeführt. In Abhängigkeit von der Menge des zugeführten Kaltwassers gelangt Warmwasser aus dem Warmwasser-Überlauf 5 in den Mischwasser-Ablauf 3. Dort mischt sich das Warmwasser mit ggf. durch Öffnen des Kaltventils 6 aus dem Kaltwasser-Zulauf 2 über die Ablaufzuführung 14 zugeführtem Kaltwasser. Andererseits ist durch die Verwendung der Hülse die Übereinstimmung der Bedienungselemente der Überlauf-Armatur mit einer Druckarmatur gegeben. Die Anschlüsse der Armatur an dem Heißwassergerät, das sind der Gerätezulauf 4 und der Warmwasser-Überlauf 5, liegen im Bereich der Stirnseite des Armaturenkörpers 1.

Gewerbliche Verwertbarkeit:

Die Erfindung ist gewerblich verwertbar im Zusammenhang mit Überlauf-Heißwassergeräten, insbesondere mit solchen, bei denen der Gerätezulauf und der Warmwasser-Überlauf extrem weit auseinander liegen.

## Patentansprüche

Armatur für über einem Armaturkörper (1) montierte Überlauf-Heißwassergeräte, welcher mit einem Mischwasser-Ablauf (3), mit einem Kaltwasser-Zulauf (2), der in eine mit einem in Ansicht in Richtung des Kaltwasserzulaufs links angeordneten Warmventil (7) versehene Kaltwasser-Gerätezuführung (11) zu einem Gerätezulauf (4) für das Heißwassergerät und in eine mit einem rechts angeordneten Kaltventil (6) versehene Kaltwasser-Ablaufzuführung (14) zum Mischwasser-Ablauf (3) geteilt ist, sowie mit einem aus dem Heißwassergerät gespeisten Warmwasser-Überlauf (5) versehen ist, der in dem Mischwasser-Ablauf (3) mündet, und welcher von einer eine Innenbohrung (28) aufweisenden und zwischen sich und dem Armaturkörper einen von der Innenbohrung getrennten Ringraum (29) bildenden Umlenkhülse (21) durchsetzt ist, dadurch gekennzeichnet, daß die Umlenkhülse (21) in dem an dem Warmventil (7) ankommenden Teil (12) der Gerätezuführung (11) angeordnet, über ihre Innenbohrung (28) einerseits mit dem Kaltwasserzulauf (2), andererseits mit dem Warmventil (7) verbunden und an der dem Warmventil (7) zugewandten Stirnseite als Ventilsitz (25) ausgebildet ist, sowie über ihren Ringraum (29) mit dem quer zu dem ankommenden Teil (12) verlaufenden abgehenden Teil (13) der Geräte zuführung (11) verbunden ist.

## Claims

Armature for a hot water overflow device mounted above an armature body, which is provided with a mixed water outlet (3), with a cold water inlet (2), which is divided into a cold water device feeder (11) provided with a hot valve (7) located on the left hand side seen in the direction of the cold water inlet (2), leading to a device inlet (4) for the hot water device and into an outlet cold water feeder (14), provided with a right hand situated cold valve (6), leading to the mixed water outlet (3), as well as with a hot water overflow (5), supplied from the hot water device, which leads into the mixed water outlet (3), and which is traversed by a deflecting sleeve (21), having an internal passage (28) and forming a separate annular chamber (29) between itself and the armature body (1), characterized in that the deflecting sleeve (21) is located at that part (12) of the device feeder (11), which arrives at the hot valve (7), is connected via its internal passage (28) to the cold water inlet (2) at one side and to the hot valve (7) at the other side and is formed as a valve sleeve (25) at its front side turned towards the hot valve (7), and is connected via its annular chamber (29) to the passing section (13) of the device feeder (11), which passes transverse to its arriving section (13).

## Revendications

Armature pour appareils à déversement d'eau chaude montés au-dessus d'un corps d'armature (1) comprenant un écoulement d'eau mélangée (3), une arrivée d'eau froide (2) divisée en une conduite d'arrivée d'eau froide (11) de l'appareil munie d'un robinet d'eau chaude (7) disposé à gauche vu dans la direction de l'arrivée d'eau froide et conduisant à un raccord (4) pour l'appareil d'eau chaude, et en une conduite d'écoulement d'eau froide (14) menant à l'écoulement d'eau mélangée (3) munie d'un robinet d'eau froide (6) disposé à droite, ainsi qu'un déverseur d'eau chaude (5) alimenté par l'appareil d'eau chaude et débouchant dans l'écoulement d'eau mélangée (3), qui est traversé par une douille de déviation (21) présentant un alésage intérieur (28) et formant entre elle-même et le corps d'armature un espace annulaire (29) séparé de l'alésage intérieur, caractérisée en ce que la douille de déviation (21) est placée dans la section (12) de la conduite d'arrivée (11) de l'appareil conduisant au robinet d'eau chaude (7), qu'elle communique par l'intermédiaire de son alésage intérieur (28) avec l'arrivée d'eau froide (2) d'une part et avec le robinet d'eau chaude (7) d'autre part, qu'elle est conformée en siège de soupape (25) à la face frontale dirigée vers le robinet d'eau chaude (7) et qu'elle communique, par l'intermédiaire de son espace annulaire (29), avec la section de départ (13) de la conduite d'arrivée (11) de l'appareil qui s'étend transversalement à la section d'arrivée (12).

EP 0 323 547 B1

Fig 1